(19) **Europäisches Patentamt / European Patent Office / Office européen des brevets**

(11) **EP 1 932 629 B1**

(12) **EUROPEAN PATENT SPECIFICATION**

(45) Date of publication and mention
of the grant of the patent:
**24.04.2019 Bulletin 2019/17**

(51) Int Cl.:
***B25J 9/16*** (2006.01)

(21) Application number: **06125771.3**

(22) Date of filing: **11.12.2006**

(54) **A method and a control system for monitoring the condition of an industrial robot**

Verfahren und Steuersystem zur Überwachung des Zustands eines Industrieroboters

Procédé et système de commande pour surveiller l'état d'un robot industriel

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR** | (74) Representative: **Ahrengart, Kenneth et al**<br>**ABB AB**<br>**Intellectual Property**<br>**Forskargränd 7**<br>**721 78 Västerås (SE)** |
| (43) Date of publication of application:<br>**18.06.2008 Bulletin 2008/25** | (56) References cited:<br>JP-A- 6 091 587    JP-A- 2006 146 572<br>US-A1- 2005 278 067    US-A1- 2005 278 148<br>US-B2- 7 086 293 |
| (73) Proprietor: **ABB Research Ltd.**<br>**8050 Zürich (CH)** | • **DATABASE WPI Week 199711 Derwent Publications Ltd., London, GB; AN 1997-112503 XP002446797 -& JP 08 318492 A (SHIBAURA SEISAKUSHO KK) 3 December 1996 (1996-12-03)** |
| (72) Inventors:<br>• **Sjöstrand, Niclas**<br>**722 40 Västerås (SE)**<br>• **Blanc, Dominique**<br>**722 40 Västerås (SE)** | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention is concerned with monitoring the performance of an industrial robot. The invention is particularly useful for detecting a malfunction of the robot.

BACKGROUND ART

An industrial robot comprises a manipulator and a control system. The manipulator comprises links movable relative to each other about a plurality of joints. The links are different robot parts such as a base, arms, and wrist. Each joint has joint components such as a motor, motor gear and motor bearings. The movements of the manipulator are driven by the motors. The control system comprises one or more computers and drive units for controlling the manipulator. The speeds and accelerations of the links are controlled by the control system of the robot that generates control signals to the motors.

Industrial robots are used in industrial and commercial applications to perform precise and repetitive movements. It is then important for a faultless functionality of the robot that the industrial robot is performing according to its nominal performance, which means that the links and joints have to be in good condition and perform together in an expected way.

However it is difficult to detect or determine if an industrial robot is not performing according to its nominal performance. The operator, such as a service technician, has to rely on what he sees and to information from the control system about the performance of the robot such as the position and speed of the motors taken from readings on sensors on the manipulator. The operator then analyses the current condition of the robot based on his personal experience resulting in a varying diagnosis due to subjective measures. In many cases the operator analysing the current condition and performance of the robot also needs to evaluate information from different sources, such as different motors at the same time or external conditions in the facility where the robot is located or is even faced with an emergency stop. To find the cause of a failure the operator may have to try different hypotheses and it is therefore time-consuming and often results in long stand-still periods for the robot causing huge costs.

Also due to frequent personal rotation today, operators of robot service technician staff do not have sufficient experience to diagnose and isolate a failure in the performance of the robot.

Further, if a failure in performance causing an emergency stop occurs, it is difficult to isolate the problem cause and what link or part of the robot that needs special attention.

It is thus desirable to attain a simple method to monitor the current performance or condition of the robot.

JP08318492 discloses a method for monitoring the condition of an industrial robot comprising calculating a friction value for at least one of said joints based on the position of the joint measured by an encoder, and determining whether the friction is normal or non-normal based on the calculated friction value property, and based thereon monitoring the condition of the robot.

US2005/278067 discloses a method for assessing a state of at least one axial joint of an industrial robot, on the basis of data of a mechanical backlash present at the axial joint of the industrial robot.

US2005/278148 discloses a method for determining the wear of axes of a robot arm of an industrial robot. A torque profile of at least one axis taken during at least one working cycle of the industrial robot is used as a basis for an analysis. The torque profile is analyzed for portions of the torque profile that exceed a previously fixed torque band, and the current axial wear is determined by assessing the frequency and/or the curve profile of the portions of the torque profile.

SUMMARY OF THE INVENTION

The aim of the invention is to provide a method to monitor malfunction of an industrial robot.

In a first aspect this aim is obtained by a method as defined by claim 1.

This makes it possible to monitor the current performance or condition of the robot. By monitoring the condition it is made possible to detect malfunction of the robot. When the condition of the performance of the robot changes due to wear and/or breakdowns of the manipulator, the measured data will show these changes. Also if the value is changing over time it is possible to detect that the condition of the robot is changing. Also if the performance is not normal it makes it possible to isolate the problem cause and what link or part of the robot that needs special attention.

The first mechanical property value is a friction value. The friction values indicates malfunction of the robot if they deviate from normal values. If a malfunction occurs in the manipulator, the friction values are changing.

According to the invention, the method comprises:

- moving one of the links in the direction of gravity,
- moving the one link in a direction opposite the gravity direction,

- collecting measured data during the movements of the link,
- keeping the velocity essentially constant while collecting the measured data, and
- calculating the at least one friction value based on the collected measured data.

This is an advantage because it simplifies the calculations when monitoring the current performance or condition of the robot because this makes it possible to eliminate the terms due to gravity.

According to an embodiment of the invention, the method comprises: calculating a first condition parameter, which indicates whether the friction is normal or non-normal, based on the calculated friction value, and monitoring the condition of the robot based on the first condition parameter. Preferably, the condition parameter is repeatedly calculated during operation of the robot. The condition parameter is a measure of the degree of deviation from normal conditions of the mechanical property. The condition parameter is, for example, displayed to the robot operator. This enables the operator to notice a change in the parameter, which indicates that the mechanical property is changing from normal to non-normal, and also enables the operator to notice the rate of change of the parameter. This embodiment makes it possible for the operator to take necessary actions, such as initiate service of the robot, before the performance of the robot is strongly reduced or damages of the robot occurs. This helps the operator to decide at which point in time the action has to be taken. Further, depending on the value of the condition parameter it is possible to detect the degree of deviation from non-normal of the friction.

In another embodiment of the invention the measured data includes information on the motor torque or the angular position of at least one motor driving at least one link. This is an advantage because this information is already measured for other purposes such as path planning.

In another embodiment of the invention the method further comprises calculating a second value for a second mechanical property, determining whether the second mechanical property is normal or non-normal based on the calculated second mechanical property, and monitoring the condition of the robot based thereon. Preferably, the method comprises calculating a second condition parameter, which indicates whether the second mechanical property is normal or non-normal based on the calculated second mechanical property, and monitoring the condition of the robot based on the first and second condition parameters. Monitoring two mechanical properties increases the possibility to detect a malfunction of the robot. Preferably the second mechanical property is any of play and noise. This embodiment further makes it possible to calculate two mechanical properties based on one measurement of the motor torque or the motor angular position.

In another embodiment of the invention, the method further comprises calculating a third value for a third mechanical property, determining whether the third mechanical property is normal or non-normal based on the calculated third mechanical property, and monitoring the condition of the robot based thereon. Preferably, the method further comprises calculating a third condition parameter, which indicates whether the third value is normal or non-normal based on the calculated third value, and monitoring the condition of the robot based on the first, second, and third condition parameters. Monitoring three different mechanical properties increases the possibility to detect malfunction of the robot. Preferably the second mechanical property is noise and the third mechanical property is play.

This combination of mechanical properties are advantageous since they together make it possible to detect many different types of malfunction of the robot. This embodiment further makes it possible to calculate three mechanical properties based on one measurement of the motor torque or the motor angular position.

In another embodiment of the invention, the method further comprises deciding when there is a malfunction based on the condition parameters. In a more preferred embodiment of the invention, the method further comprises generating an alarm if any of the condition parameters indicates that the mechanical property is non-normal. This is an advantage when the method is used for automated supervison. In a preferred embodiment this is used to generate an emergency stop if a malfunction has occurred.

In another embodiment of the invention the method further comprises:

- calculating a deviation between the calculated mechanical property value and an expected mechanical property value, and
- calculating the condition parameter based on the deviation.

This makes it possible to detect the degree of malfunction of the robot depending on the value of the deviation within a range.

In another embodiment of the invention the calculated friction value is a sum of at least two of the following friction values are calculated: the viscous friction, the Coulomb friction, the static friction, the Stribeck friction. By calculating more friction values a more accurate friction value is obtained.

In another embodiment of the invention at least the calculated friction value is a sum of the viscous friction and the Coulomb friction. This is an advantage because these friction values have the largest contribution to the friction and therefore gives a calculated approximate value with sufficient accuracy.

In another embodiment of the invention at least one friction value is the viscous friction.

In another embodiment of the invention the calculated friction value is the motor torque due to friction.

In a second aspect this aim is obtained by a control system as defined by claim 17.

Other advantageous features of the invention will appear from the following description.

BRIEF DESCRIPTION OF THE DRAWINGS

The present invention will be described in more detail in connection with the enclosed schematic drawings.

Figure 1A    shows an industrial robot comprising a manipulator and a control system adapted to control the robot,

Figure 1B    shows two links movable relative to each other about a joint,

Figure 2    shows a block diagram of a part of a control system for monitoring malfunction of an industrial robot,

Figure 3A    shows a block diagram illustrating a method for monitoring malfunction of an industrial robot according to a first embodiment of the invention,

Figure 3B    shows a block diagram illustrating a method for monitoring malfunction of an industrial robot according to a second embodiment of the invention,

Figure 3C    shows a block diagram illustrating a method for monitoring malfunction of an industrial robot according to a third embodiment of the invention,

Figure 4A    shows a diagram illustrating another method for monitoring malfunction of an industrial robot comprising a friction model,

Figure 4B    shows two links movable relative to each other about a joint and a load illustrating another embodiment of the method for monitoring malfunction of an industrial robot,

Figure 5    shows a diagram illustrating another method for monitoring malfunction of an industrial robot comprising a backlash model, and

Figure 6    shows a noise diagram illustrating another method for monitoring malfunction of an industrial robot comprising a noise model.

DESCRIPTION OF THE PREFERRED EMBODIMENTS

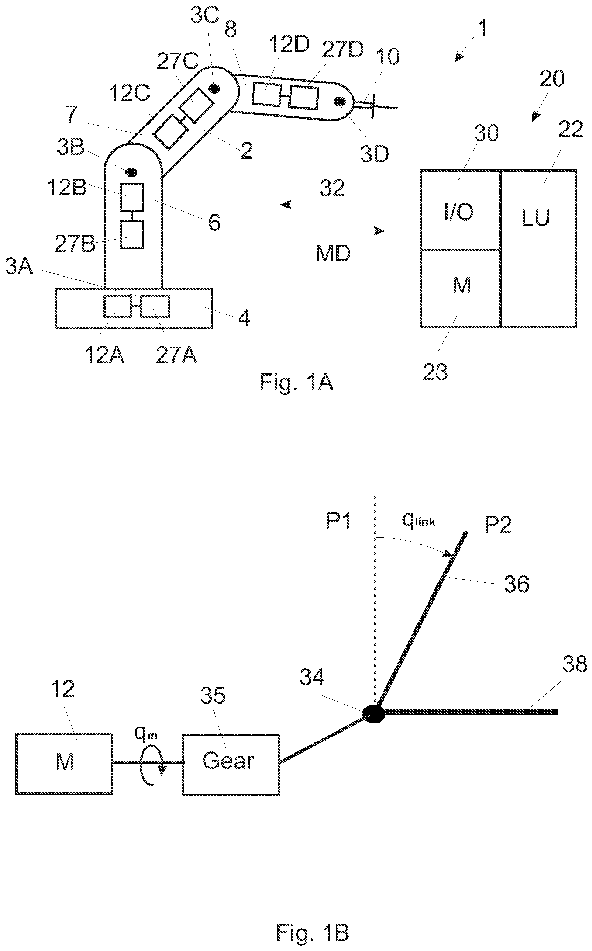

Figure 1A shows an industrial robot 1 comprising a manipulator 2 and a control system. The industrial robot has a plurality of links movable relative to each other about a plurality of joints 3A,3B,3C,3D, in this case rotatable in relation to each other around an axis of rotation. The links are in this case robot parts, such as a stand 4, robot arms 6,7,8, and a wrist 10 comprising a turn disc. The industrial robot comprises a plurality of motors 12A,12B,12C,12D controlling the position and speed of the links. The control system is illustrated as a simplified block diagram. The control system comprises, in this case, a control unit 20 including one or more logic units 22, a memory unit 23 and drive units 27A,27B,27C,27D for controlling the motors. The logic unit comprises a microprocessor, or processors comprising a central processing unit (CPU) or a field-programmable gate array (FPGA) or any semiconductor device containing programmable logic components. The control unit is adapted to run a control program, stored in the memory unit 23. The control unit is further adapted to generate a movement path based on movement instructions in the control program run by the logic units 22.

The drive units 27A,27B,27C,27D are controlling the motors by controlling the motor current and the motor position in response to control signals from the control unit 20. The control unit 20 comprises input/output interfaces (I/O) 30. On the robot and in the environment surrounding the robot there are also arranged a plurality of sensors. The sensors on the manipulator 2 and in the environment of the manipulator 2 are connected to the I/O 30 of the control unit 20 via a wired or wireless link 32. The control unit 20 thereby receives signals comprising measured data MD. The measured data MD may, for example, be robot condition monitoring data or log information from the robot controller. The measured data MD comprises, for instance, motor angular position, motor speed, tilting, load and environmental data such as the temperature. The industrial robot has rotational axes, linear axes or a mixture of both.

A model of the joints is established. Figure 1B illustrates such an embodiment of a model of a joint 34, wherein the model comprises, in this case, two links: a first link 36 and a second link 38 movable relative to each other about the joint 34. The model is a static rigid two-mass model without flexibilities, and the assumption is used that only one link is moved at the time.

In the model, the first link 36 is considered moving relative to the second link 38. The second link 38 is considered relatively motionless in the model. The movement of the first link 36 is driven and controlled by a motor 12 connected to the joint via a gear 35. The motor 12 and the first link 36 are considered to have a stiff gear coupling. Therefore the motor 12 and the first link 36 are considered as one mass. In the figure a movement of the first the link 36 from a first position P1 to a second position P2 is illustrated, which corresponds to an angular position $q_{link}$. To record the movement of the link, it is necessary to transform the data from an angular position of the motor $q_m$ to the angular position $q_{link}$ of the link. Since the motor is considered having a stiff gear coupling, in this case, the transmission from the motor to the link is characterized by a gear ratio n and the moment of the rotational inertia of the link and motor. We therefore use the assumption that n times the angular position $q_{link}$ of the first link relative to the second link is considered corresponding to an angular position $q_m$ of the motor.

$$q_m = n^*q_{link} \qquad\qquad (1)$$

In the embodiments described below the measured data for the joint 34 in this case comprises information on the angular position $q_m$, and the torque $\tau_m$ of the motor. The velocity $q_m'$ and the acceleration $q_m''$ of the motor are, for instance, derived from the angular position $q_m$ using a mathematical method such as central difference calculations:

$$\text{Velocity} = v = q_m' \qquad\qquad (2)$$

$$\text{Acceleration} = A = v' = q_m'' \qquad\qquad (3)$$

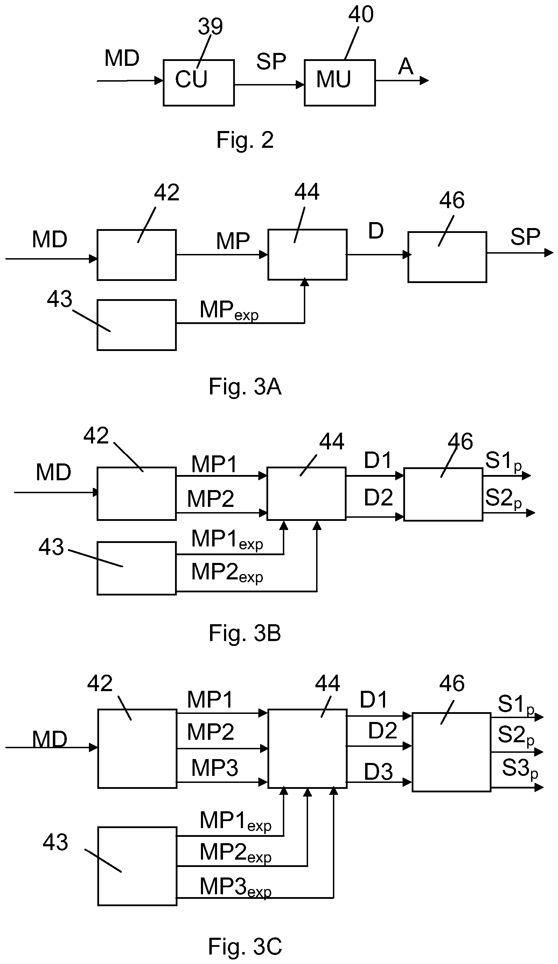

Figure 2 shows a part of the control system for monitoring malfunction of an industrial robot, such as the industrial robot 1 described above. The control system comprises a calculating unit 39 and a monitoring unit 40. It is to be understood that the control system comprises these units either as hardware or software units.

The calculating unit 39 is adapted to calculate a value for a mechanical property MP, for at least one of the joints based on measured data MD from the joint. The mechanical property value is a friction value. In preferred embodiments second and third mechanical property values can also be calculated. These second and third mechanical property values are a mechanical noise value and a play value. The calculating unit 39 is further adapted to calculate a condition parameter SP, which indicates whether the mechanical property is normal or non-normal, based on the calculated mechanical property MP. The monitoring unit 40 is adapted to monitor the condition of the robot based on the condition parameter SP.

Figure 2 also describes a method for monitoring malfunction of an industrial robot. First a joint is selected. A plurality of measured data MD for the selected joint are collected. A value for the mechanical property MP for the joint is calculated based on measured data MD from the joint. Then the condition of the robot is monitored based on the calculated mechanical property MP.

In one embodiment of the invention, a condition parameter SP, which indicates whether the mechanical property is normal or non-normal, is calculated based on the calculated mechanical property MP Then the condition of the robot is monitored based on the condition parameter SP.

In another embodiment of the method a decision is made in the monitoring unit 40 whether or not there is a malfunction based on the condition parameter SP.

In another embodiment of the method, an alarm A is generated if the condition parameter SP indicates that the mechanical property is non-normal.

Figure 3A shows a first embodiment of the method for monitoring malfunction of an industrial robot and is also describing an embodiment of the calculating unit 39 more in detail. The mechanical property value MP is calculated for the selected joint based on the measured data MD from the joint in a mechanical property calculating unit 42. An expected mechanical property $MP_{exp}$ is retrieved, for instance, from the memory of the control unit or calculated based on prestored data in a retrieving unit 43. Then the calculated mechanical property MP is compared with the expected mechanical property $MP_{exp}$ in a comparing unit 44, wherein a deviation D between the calculated mechanical property MP and the expected mechanical property $MP_{exp}$ is calculated. After that a condition parameter SP is calculated based on said deviation D in a condition calculating unit 46. The condition parameter is, for example, calculated as a quotient between the deviation and the expected mechanical property: $SP = D/MP_{exp}$. If the difference between the calculated and expected mechanical property values is small or zero, the condition parameter will become zero, or close to zero, which indicates that the first mechanical property MP is normal. If the value of the condition parameter is increasing and/or becomes above a threshold value, it is an indication of the fact that the first mechanical property MP is non-normal or is close to being non-normal. Alternatively, the condition parameter can be calculated by using a logarithm of the difference D or a derivative of the mechanical property value.

In another embodiment of the inventive method, the expected mechanical property value $MP_{exp}$ is calculated using a reference movement set up for the robot. The resulting estimated expected mechanical property value $MP_{exp}$ is stored, for instance, in the memory 23 of the control system as initial values of the expected mechanical property values.

In another embodiment of the invention, the expected mechanical property value $MP_{exp}$ is calculated continuously during operation of the robot in dependence on a feedback signal that estimates subsequent expected mechanical property values, thereby detecting variations in the mechanical property value. The expected mechanical property value $MP_{exp}$ is then $MP_{exp1}$, $MP_{exp2}$, ...$MP_{expn}$

Figure 3B shows a second embodiment of the invention and is also describing another embodiment of the calculating unit 39 more in detail. A first mechanical property value MP1 is calculated as described above. This embodiment of the method further comprises calculating a second value for a second mechanical property MP2.

The mechanical property values MP1 and MP2 are calculated in the mechanical property calculating unit 42. A first expected mechanical property $MP1_{exp}$ and a second expected mechanical property $MP2_{exp}$ are retrieved for each mechanical property from the retrieving unit 43. Then the calculated mechanical property values MP1 and MP2 are compared with the respective expected mechanical property $MP1_{exp}$ and $MP2_{exp}$ in the comparing unit 44. A first deviation D1 between the first calculated mechanical property MP1 and the expected first mechanical property $MP1_{exp}$ is calculated. A second deviation D2 between the second calculated mechanical property MP2 and the expected second mechanical property $MP2_{exp}$ is calculated. After that a first condition parameter $S1_p$ is calculated based on the first deviation D1 and a second condition parameter $S2_p$ is calculated based on the second deviation D12 in the condition calculating unit 46. The condition parameters $S1_p$ and $S2_p$ indicate whether the first and second mechanical properties are normal or non-normal.

In another embodiment of the invention, one condition parameter SP is calculated based on both the mechanical properties wherein the condition parameter SP indicates whether the first and second mechanical properties are normal or non-normal. The condition of the robot may then be monitored based on the single mechanical property SP or based on the first $S1_p$ and second condition parameters $S2_p$. The first mechanical property value MP1 is a friction value. The second mechanical property value MP2 is one of a play value and a noise value.

Figure 3C shows a third embodiment of the invention and is also describing yet another embodiment of the calculating unit 39 more in detail. A first mechanical property value MP1 is calculated based on a first mechanical property value, a second mechanical property value MP2 is calculated based on a second mechanical property value, as described above. The third embodiment of the invention further comprises calculating a third mechanical property value MP3 based on a third mechanical property value. The condition of the robot is then monitored based on the first, second, and third mechanical property values MP1, MP2, MP3. The first mechanical property value MP1 is a friction value. The second and the thid mechanical property values MP2, MP3 are a noise value and a play value.

The mechanical property values MP1, MP2, MP3 are calculated in the mechanical property calculating unit 42. A first expected mechanical property $MP1_{exp}$, a second expected mechanical property $MP2_{exp}$ and a third expected mechanical property $MP3_{exp}$ are retrieved for each mechanical property from the retrieving unit 43. Then the calculated mechanical property values MP1, MP2 and MP3 are compared with the respective expected mechanical property $MP1_{exp}$, $MP2_{exp}$ and $MP3_{exp}$ in the comparing unit 44. A first and a second deviation D1 and D2 are calculated as described above in the second main embodiment. Further a third deviation D3 between the third calculated mechanical property MP3 and the expected third mechanical property $MP3_{exp}$ is calculated. After that a first, a second and a third condition parameter $S1_p$, $S2_p$, and $S2_p$ are calculated based on the first deviation D1, the second deviation D2 and the third deviation D3, respectively. The condition parameters $S1p$, $S2_p$ and $S3_p$ indicate whether the first, second and third mechanical properties are normal or non-normal. The condition of the robot is then monitored based on the first, second, and third condition parameters $S1_p$, $S2_p$, $S3_p$.

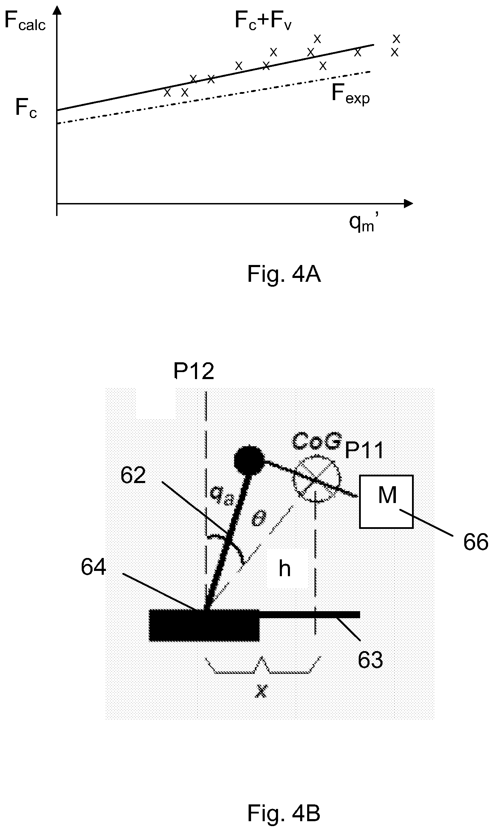

Figure 4A shows a diagram illustrating a fourth main embodiment of the method described above wherein the mechanical property value MP is a friction value. The fourth main embodiment of the method further comprises a friction model for an industrial robot joint, illustrated in the diagram. In the friction model the calculated mechanical property value MP is a calculated friction value $F_{calc}$ that is considered to be a sum term of all friction forces. The sum term $F_{calc}$ of all friction forces is calculated based on measured data MD from the selected joint. In the diagram the representation of the measured data is displayed as crosses. The friction forces are considered due to the movement of the motors and gears of the selected joint. Friction is, in this embodiment, considered a function of the relative speed of the links in contact with each other during movement of the links relative to each other about the joints. In this embodiment of the method a comparison between the calculated friction value $F_{calc}$ and at least one expected friction value $F_{exp}$ for a selected joint, wherein a deviation D between the calculated friction value $F_{calc}$ and the expected friction value $F_{exp}$ is

calculated. After that it is determined whether the friction is normal or non-normal based on the calculated deviation D. The continuous line in the diagram represents an adaption to the measured data. The formula determining the adapted continuous line then determines the calculated friction value $F_{calc}$. The adaptation is done using a mathematical numerical equation evaluation method, for instance a regression analysis. The dotted line represents the value of the expected friction $F_{exp}$. The deviation D is then the difference between the calculated friction value $F_{calc}$ and the expected friction $F_{exp}$. The deviation D is then calculated by analyzing the diagram using a mathematical numerical equation evaluation method, for instance the least-squares method.

In this first main embodiment we further make the assumption that the calculated friction value $F_{calc}$ is a function of the Coulomb friction $F_c$ and the viscous friction $F_v$. The Coulomb friction $F_c$ is the friction that has to be overcome to start the movement between the links. The viscous friction $F_v$ is the friction that has to be overcome to continue the movement between the links. In this model we estimate that the sum term of all friction forces, the calculated friction value $F_{calc}$, is the sum of the following two factors, the viscous friction $F_v$ multiplied by the velocity v of the first link relative the second link and the Coulomb friction $F_c$ multiplied by the signum function:

$$F_{calc} = F_v * v + F_c * \text{sign}(v) \tag{4}$$

Figure 4B shows another embodiment of the fourth main embodiment of the method for monitoring malfunction of an industrial robot having a plurality of links movable relative to each other about a plurality of joints. The figure 4B illustrates a model of a selected joint 64. A first link 62 and a second link 63 are movable relative to each other about the joint 64. In this model the first link is handling an external load 66. The external load 66 is represented as a mass M. An angular position $q_a$ represents the angular movement of the first link 62 from an initial angular position P12 to a resulting position P11. In the model a center of gravity ($C_oG$) is also introduced located in such a way that the mass and the gravity will introduce a resulting torque $\tau_{CoG}$ at the joint 64. The angle between the first link 62 and the point of application of the resulting torque

$$\tau_{CoG}$$

is $\theta$. The assumptions are used in the model during the measurement that only the first link is 62 moved and that $\theta$ is constant. The resulting torque $\tau_{CoG}$ is equal to the mass M times gravity g times the length x from the $C_oG$ to the joint:

$$\tau_{CoG} = M * g * x \tag{5}$$

The model deals with two masses, the first link 62 and the motor controlling and driving the first link 62. The model therefore introduces an inertia for the motor $J_m$, and an inertia for the link $J_{link}$. A stiff gear coupling is considered in the model; therefore a total moment of inertia J for the motor is assumed. The total moment of inertia J for the motor is dependent on the inertia for the motor $J_m$, and the inertia for the link $J_{link}$. In one embodiment of this fourth main embodiment of the method the gear ratio n assumption as described in equation 1 is used. Then the total inertia J with respect to the gear ratio n and due to the acceleration estimation used above is the sum of the inertia for the motor $J_m$, and $n^2$ times the inertia for the link $J_{link}$:

$$J = J_m + n^2 * J_{link} \tag{6}$$

The quantity of the measured value of the motor torque $\tau_m$ is determined as the total inertia J times the acceleration of the motor $q_m$" plus the sum term $F_{calc}$ of all friction forces plus the resulting torque $\tau_{CoG}$:

$$\tau_m = J * q'' + F_{calc} + \tau_{CoG} \tag{7}$$

In the figure 4B the sum of the angles $q_a$ and $\theta$ is the angle between the initial angular position P12 and the point of application of the resulting torque $\tau_{CoG}$ Introducing h as the distance between the center of motion in the joint 64 and the point of application of the resulting torque, the length x between the joint 64 and the center of gravity along the second link may be calculated. The magnitude of x is determined by $q_a$, $\theta$, and h, and using trigonometric functions x is transformed into:

$$x = h*\sin(q_a + \theta) = h*(\sin(q_a) * \cos(\theta) + \cos(q_a) * \sin(\theta)) \tag{8}$$

and the resulting torque $\tau_{CoG}$ at CoG from the mass can be written as:

$$\tau_{CoG} = M*g*h * \sin(q_a + \theta) = M*g*h*(\sin(q_a) * \cos(\theta) + \cos(q_a) * \sin(\theta)) \tag{9}$$

If the sum term $F_{calc}$ of all friction forces is the Coulomb friction $F_c$ and the viscous friction $F_v$ and the length x from the $C_0G$ to the joint is described with trigonometric functions, the equation 7 becomes:

$$\tau_m = J*q'' + F_v *q'_m + F_c *\mathrm{sign}(q'_m) + M*g*h* (\sin(q_a)*\cos(\theta) + \cos(q_a)*\sin(\theta)) \tag{10}$$

In this model the friction values $F_v$, $F_c$ as identified above are identified using an mathematical estimation method, for instance normal linear regression. In this case we define a parameter vector:

$$X = [J, F_v, F_c, M*g*h*\cos(\theta), M*g*h* \sin(\theta)]^T \tag{11}$$

and a regression vector where k is the sample index of the measured data:

$$\varphi_k = [q''_{m,k}, q'_{m,k}, \mathrm{sign}(q'_{m,k}), \sin(q_{a,k}), \cos(q_{a,k})]^T \tag{12}$$

The equation 10 of the motor torque for both linear and rotational motions corresponding to a plurality of measurements as shown in the diagram of figure 4A can then be written as:

$$\tau_{m,k} = X^T\varphi_k \tag{13}$$

In this embodiment of the method a comparison between the measured motor torque $\tau_{m,k}$ and an expected motor torque $\tau_{exp,k}$ is calculated.

$$G = G(\tau_{m,k}, \tau_{exp,k}) \tag{14}$$

In yet another embodiment of the fourth main embodiment a value dependent on the difference between the measured motor torque $\tau_{m,k}$ and an expected motor torque is calculated:

$$G_1 = G(\tau_{m,k} -\tau_{exp,k}) = G(X^T\varphi_k -\tau_{exp,k}) \tag{15}$$

The solution for the above described embodiments of the fourth main embodiment is, for instance, calculated using the least-square method. We then calculate the parameters that minimize the deviation D between the estimated and the measured torque. The solution to vector X then gives us calculated friction values, $F_{calc}$, $F_v$, $F_c$.

In another embodiment of the fourth main embodiment of the method for monitoring the condition of an industrial robot the assumption is made that the motion is linear motion in the model illustrated in figure 4B. The conditions are set so that $\tau_{CoG}$ is constant and not dependant on the actual position of the link 62. Then $\tau_{CoG}$ can be written as

$$\tau_{CoG} = M*g*h*\cos(\theta) \tag{16}$$

where $\theta$ represents the angle of the linear motion, in this case defined as the deviation D from an horizontal level. The complete torque model $\tau_m$, as described in equation 9, 10 then becomes:

$$\tau_m = J*q_m'' + F_v* q_m' + F_c*sign(q_m') +M*g*h*cos(\theta). \qquad (17)$$

For linear motions equation 15 the linear regression becomes:

$$X = [J \; F_v \; F_c \; M*g*h*cos(\theta))]^T \qquad (18)$$

$$\varphi_k = [q''_{m,k}, q'_{m,k}, sign(q'_{m,k})]^T \qquad (19)$$

In another embodiment of the fourth main embodiment of the method to monitor malfunction of an industrial robot the assumption that only one link is moving is made. The method comprises:

- moving one of said links in the direction of gravity,
- moving said one link in a direction opposite to the gravity direction,
- collecting measured data during the movements of the link,
- keeping the velocity essentially constant while collecting the measured data, and
- calculating said at least one friction value based on the collected measured data.

The collecting of measured data is thereby construed so that the components dependent on gravity cancel each other. This will give a simpler calculation.

In another embodiment of the method described above moving only one link so that components dependent on gravity cancel each other the at least one friction value is the viscous friction ($F_v$). To solve the difference between the measured motor torque $\tau_{mforward}$ in a first direction and the measured motor torque $\tau_{mfback}$ in the opposite direction the following equation may be used:

$$T_{fric} = [\tau_{mforward} - \tau_{mback}(q'_m, q)]/2= \qquad (20)$$

In another embodiment of the method described above and moving only one link so that components dependent on gravity cancel each other, i.e. rotation of a link where the link moves back and fourth along the direction of gravity, the gravitation terms of the equation will have the same quantity but different signs so that they eliminate each other. Because the gravitation terms of the equation eliminate each other they do not need to be determined in the calculations. The measured motor torque $\tau_m$ then becomes:

$$T_m = J*q''_m + F_v*q'_m + F_c*sign(q'_m). \qquad (21)$$

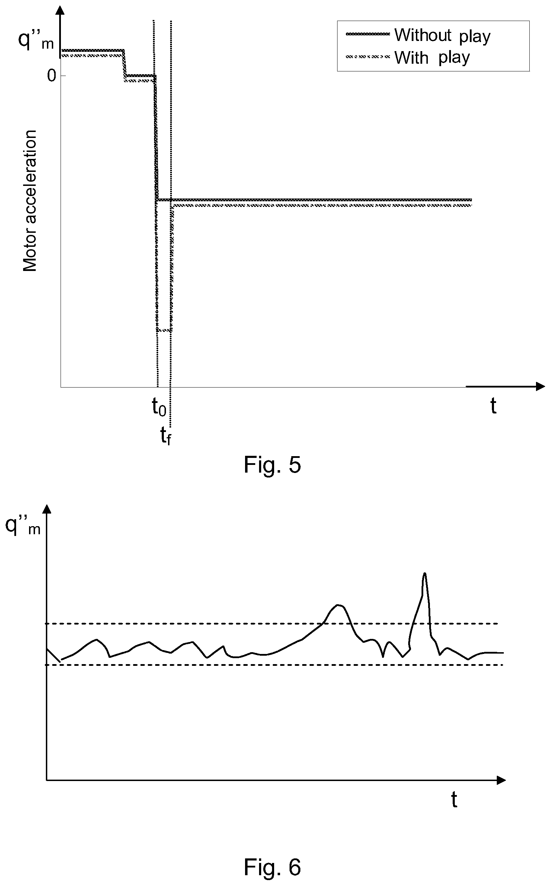

Figure 5 shows a diagram illustrating how play affects the motor acceleration versus time for a joint of the robot. Play occurs in the motor movement of a motor driving a link when two mechanical parts in the motor, such as in a gear box or in motor bearings, are not in physical contact with each other and thus cause the motor to move without driving the link. The lost motion may occur when a motor is run in forward and reverse directions. The figure shows the motor acceleration $q''_m$ depending on time t. The time $t_0$ is the time when the lost motion starts and $t_f$ the time when the lost motion ends, respectively. The play is detected in that the acceleration suddenly drops at $t_0$ and suddenly increases rapidly at $t_f$.

According to an embodiment of the invention, the condition of an industrial robot is monitored by continuously monitoring the play of the joints of the robot. The second mechanical property value MP2 or the third mechanical property value MP3 is a play value. The play value $\varphi$ is in this case a quantity that represents when two mechanical parts are not in contact with each other due to unpredicted clearance between the mechanical parts. The play value $\varphi$ is calculated by either taking the integral of the velocity during the lost motion time period or the absolute position difference between the start of lost motion and end of lost motion.

$$\varphi = \int_{t_0}^{t_f} q'_m(t)dt = \left| q_m(t_f) - q_m(t_o) \right| \tag{21}$$

The monitoring of the condition of the industrial robot is, for example, done by monitoring variations in play, also denoted backlash. In one embodiment of the invention, the malfunction of an industrial robot is monitored by repeatedly: calculating a first mechanical property value MP, representing a play value, for at least one of the joints based on measured data MD from the joint, and calculating a condition parameter SP, which indicates whether the play value is normal or non-normal, based on the calculated mechanical property, monitoring the condition of the robot based on the condition parameter SP.

A normal play value is in this case 1-2 minutes of arc. The determination of whether the mechanical property is normal or not is, for instance, done by comparing the play value with a maximally allowed play value, or with a nominal play value specific for the manipulator in use. Alternatively, the determination whether the mechanical property is normal or not is done by detecting a continuous variation in play over time, such as a continuous increase in play, i.e. following a trend.

For example, a curve representing the play value dependent on time is displayed on an external display. The calculated play value may also be compared with a predetermined maximum play value or a calibrated value. The difference between the calculated play value and a maximum play value may also be calculated and monitored on an external display for the use of the operator. The condition parameter SP may also be shown on an external display. The calculated play value MP, the condition parameter SP or the comparison between the calculated play value and a maximum play value, such as a difference, may also be handled internally in the control system, for instance for initiating the creation of an alarm.

Figure 6 illustrates noise in the motor acceleration of the robot joint. According to an embodiment of the invention, the second mechanical property value MP2 or the third mechanical property value MP3 is a mechanical noise value. A noise value is in this case considered a signal with abnormal amplitude and/or abnormal frequency, such as ripple, when the position value q is measured. In one embodiment of the method wherein the mechanical property is a noise value, linear mechanical noise is monitored. The noise value is, for instance, calculated by calculating a root mean square value (RMS) of the noise value over time, or by calculating the peak-to-peak value of the noise values The diagram shows the motor acceleration $q''_m$ depending on time t. The diagram shows the variations in a continuous motor acceleration due to mechanical noise. An upper and a lower limit in variation are also shown in the diagram. The noise value can also be calculated by using the measured data on the motor torque $T_m$ or the angular position $q_m$ of the motor driving a link, or the speed of the motor $q'_m$.

Detecting whether the noise value is normal or not is done, for instance, by comparing the noise value with a maximum noise value or a nominal noise value specific for the manipulator in use. In another embodiment detecting whether the noise value is normal or not is done by detecting a continuous variation in noise over time, such as a continuous increase in mechanical noise, i.e. following a trend.

The above methods are applicable, for instance, for a small and large robots as well as a gantry robot. A small robot is typically about 80 cm high and weighs about 100 kg. It has a handling capacity of about 5 kg at the tool center point (TCP) and, for instance, six working axes (all rotational). It is used in applications like, for instance, arc welding, cleaning/spraying and packing.

This invention is applicable to all industrial areas where industrial robots are mandated and other areas where introducing industrial robots is under discussion. It will be understood by those skilled in the art that various modifications and changes may be made to the present invention without departure from the scope thereof, which is defined by the appended claims. In the above mentioned embodiments of the methods the sum term $F_{calc}$ of all friction forces, for instance $F_v$ and $F_c$, may be calculated for different links and for different loads.

In a physical implementation of the invention, for instance, the operator uses: a tablet personal computer PC, a wearable computer, manipulators, hand-held control devices, and, for instance, with wireless access to information via General Packet Radio Service (GPRS), WLAN, Bluetooth or other.

**Claims**

1.   A method for monitoring the condition of an industrial robot (1) having a plurality of links (4,6,7,8,10, 36, 62) movable relative to each other about a plurality of joints (3A,3B,3C,3D,34,64), wherein the method comprises repeatedly:

   - moving one of said links (4,6,7,8,10, 36, 62) in the direction of gravity,

- moving said one link in a direction opposite the gravity direction,
- collecting measured data during the movements of the link,
- keeping the velocity essentially constant while collecting the measured data,
- calculating at least one friction value for at least one of said joints based on the collected measured data from said joint,
- determining whether the friction is normal or non-normal based on the calculated friction value, and based thereon monitoring the condition of the robot.

2. The method according to claim 1, **wherein** the method comprises: calculating a first condition parameter (SP, $S1_p$), which indicates whether the friction (MP,MP1) is normal or non-normal, based on the calculated friction value and monitoring the condition of the robot based on said first condition parameter.

3. The method according to claim 1 or 2, **wherein** the method further comprises calculating a second value (MP2) for a second mechanical property, determining whether the second mechanical property is normal or non-normal based on the calculated second mechanical property, and monitoring the condition of the robot based thereon.

4. The method according to claim 3, **wherein** the method further comprises calculating a second condition parameter ($S2_p$), which indicates whether the second mechanical property (MP2) is normal or non-normal based on the calculated second mechanical property, and monitoring the condition of the robot based on said first and second condition parameters.

5. The method according to claim 3 or 4, **wherein** said second mechanical property (MP2) value is a play value or a noise value.

6. The method according to any of the claims 3 - 5, **wherein** the method further comprises calculating a third value (MP3) for a third mechanical property, determining whether the third mechanical property is normal or non-normal based on the calculated third mechanical property, and monitoring the condition of the robot based thereon.

7. The method according to claim 6, **wherein** the method further comprises calculating a third condition parameter ($S3_p$), which indicates whether the third mechanical property value (MP3) is normal or non-normal based on the calculated third mechanical property value, and monitoring the condition of the robot based on said first ($S1_p$), second ($S2_p$), and third condition parameters ($S3_p$).

8. The method according to claim 6 or 7, wherein said second mechanical property is noise, and said third mechanical property is play.

9. The method according to any of the claims 2,4 or 7, **wherein** the method further comprises deciding whether there is a malfunction based on said condition parameter(s) (SP, $S1_p$,$S2_p$,$S3_p$).

10. The method according to any of the claims 4 or 7, **wherein** the method further comprises generating an alarm (A) if any of said condition parameters (SP, $S1_p$,$S2_p$,$S3_p$) indicates that the mechanical property is non-normal.

11. The method according to any of claims 2, 4 or 7, **wherein** the method further comprises:

    - calculating a deviation (D) between the calculated mechanical property value (MP, MP1, MP2, MP3) and an expected mechanical property value ($MP_{exp}$, $MP1_{exp}$, $MP2_{exp}$, $MP3_{exp}$, $MP_{expi}$), and
    - calculating said condition parameter (SP, $S1_p$,$S2_p$,$S3_p$) based on said deviation.

12. The method according to any of the preceding claims, **wherein** said measured data (MD) includes information on the motor torque ($\tau_m$) or the angular position ($q_m$) of at least one motor driving at least one link.

13. The method according to claim 1, **wherein** the calculated friction value is a sum of at least two of the following friction values: the viscous friction ($F_v$), the Coulomb friction ($F_c$), the static friction, the Stribeck friction.

14. The method according to claim 1, wherein the calculated friction value is a sum of at least the following friction values: the viscous friction ($F_v$) and the Coulomb friction ($F_c$).

15. The method according to claim 1, **wherein** said at least one friction value is the viscous friction ($F_v$).

**16.** The method according to claim 1, **wherein** the calculated friction value is the motor torque due to friction ($T_{fric}$).

**17.** A control system for monitoring the condition of an industrial robot (1) having a plurality of links (4,6,7,8,10, 36, 62) movable relative to each other about a plurality of joints (3A,3B,3C,3D,34,64), wherein the control system comprises:

- a control unit (20) controlling the motions of the links,
- a calculating unit (39) adapted to calculate a friction value (MP, MP1) for at least one of said joints based on measured data (MD) from said joint, and to determine whether the friction is normal or non-normal based on the calculated friction value, and
- a monitoring unit (40) for monitoring the condition of the robot based on said determination of whether the friction value is normal or non-normal, **characterized in that** the control unit is adapted to move one of said links (4,6,7,8,10, 36, 62) in the direction of gravity, to move said one link in a direction opposite the gravity direction, to collect measured data during the movements of the link, and to keep the velocity essentially constant while collecting the measured data, and said calculating unit (39) is adapted to calculate the friction value (MP2) based on the collected measured data.

**18.** The control system according to claim 17, **wherein** said calculating unit is adapted to calculate a first condition parameter (SP, $S1_p$), which indicates whether the friction is normal or non-normal based on the calculated friction value, and said monitoring unit (40) is adapted to monitor the condition of the robot based on said first condition parameter.

**19.** The control system according to claim 17 or 18, **wherein** said calculating unit (39) further is adapted to calculate a second value for a second mechanical property (MP2) and said monitoring unit (40) is adapted to monitor the condition of the robot based on said determination of whether the second mechanical property is normal or non-normal.

**20.** The control system according to claim 19, wherein said second mechanical property is noise.

**21.** The control system according to claim 19, **wherein** said calculating unit (39) is adapted to calculate a second condition parameter ($S2_p$), which indicates whether the second mechanical property (MP2) is normal or non-normal, based on the calculated second mechanical property, and said monitoring unit (40) is adapted to monitor the condition of the robot based on said first ($S1_p$) and second condition parameters ($S2_p$).

**22.** The control system according to claim 19, **wherein** said calculating unit (39) further is adapted to calculate a third value for a third mechanical property (MP3) and said monitoring unit (40) is adapted to monitor the condition of the robot based on said determination of whether the third mechanical property is normal or non-normal.

**23.** The control system according to claim 22, **wherein** said calculating unit (39) further is adapted to calculate a third condition parameter ($S3_p$), which indicates whether the third mechanical property is normal or non-normal based on the calculated third mechanical property, and said monitoring unit (40) is adapted to monitor the condition of the robot based on said first, second, and third condition parameters ($S1_p,S2_p,S3_p$).

**24.** The control system according to claim 22 or 23, wherein said third mechanical property is play.

**25.** The control system according to any of the claims 18, 21 or 23, **wherein** the monitoring unit (40) is further adapted to generate an alarm (A) if any of said condition parameters (SP, $S1_p,S2_p,S3_p$) indicates that the mechanical property is non-normal.

**26.** The control system according to any of claims 18, 21 or 23, **wherein** said calculation unit is further adapted to calculate a deviation (D) between at least one calculated mechanical property value (MP, MP1, MP2, MP3) and an expected mechanical property value, and calculating said condition parameter (SP, $S1_p,S2_p,S3_p$) based on said deviation (D).

**Patentansprüche**

**1.** Verfahren zum Überwachen des Zustandes eines Industrieroboters (1) mit einer Vielzahl von Gliedern (4, 6, 7, 8, 10, 36, 62), die um eine Vielzahl von Gelenken (3A, 3B, 3C, 3D, 34, 64) relativ zueinander bewegbar sind, wobei das Verfahren wiederholt Folgendes umfasst:

- Bewegen von einem der Glieder (4,6,7,8,10, 36, 62) in die Richtung der Schwerkraft,
- Bewegen des einen Glieds in eine Richtung, die der Schwerkraftrichtung entgegengesetzt ist,
- Sammeln von Messdaten während der Bewegungen des Glieds,
- Halten der Geschwindigkeit im Wesentlichen konstant, während die Messdaten gesammelt werden,
- Berechnen von mindestens einem Reibungswert für mindestens eines der Gelenke auf Basis der gesammelten Messdaten von dem Gelenk,
- Bestimmen auf Basis des berechneten Reibungswerts, ob die Reibung normal oder nicht normal ist, und darauf basierend Überwachen des Zustandes des Roboters.

2. Verfahren nach Anspruch 1, **wobei** das Verfahren Folgendes umfasst: Berechnen eines ersten Zustandsparameters ($SP$, $S1_p$), der auf Basis des berechneten Reibungswerts anzeigt, ob die Reibung ($MP$,$MP1$) normal oder nicht normal ist, und Überwachen des Zustandes des Roboters auf Basis des ersten Zustandsparameters.

3. Verfahren nach Anspruch 1 oder 2, **wobei** das Verfahren ferner das Berechnen eines zweiten Wertes ($MP2$) für eine zweite mechanische Eigenschaft, das Bestimmen auf Basis der berechneten zweiten mechanischen Eigenschaft, ob die zweite mechanische Eigenschaft normal oder nicht normal ist, und darauf basierend das Überwachen des Zustandes des Roboters umfasst.

4. Verfahren nach Anspruch 3, **wobei** das Verfahren ferner das Berechnen eines zweiten Zustandsparameters ($S2_p$), der auf Basis der berechneten zweiten mechanischen Eigenschaft anzeigt, ob die zweite mechanische Eigenschaft ($MP2$) normal oder nicht normal ist, und das Überwachen des Zustandes des Roboters auf Basis des ersten und des zweiten Zustandsparameters umfasst.

5. Verfahren nach Anspruch 3 oder 4, **wobei** der Wert der zweiten mechanischen Eigenschaft ($MP2$) ein Spielwert oder ein Geräuschwert ist.

6. Verfahren nach einem der Ansprüche 3-5, **wobei** das Verfahren ferner das Berechnen eines dritten Wertes ($MP3$) für eine dritte mechanische Eigenschaft, das Bestimmen auf Basis der berechneten dritten mechanischen Eigenschaft, ob die dritte mechanische Eigenschaft normal oder nicht normal ist, und darauf basierend das Überwachen des Zustandes des Roboters umfasst.

7. Verfahren nach Anspruch 6, **wobei** das Verfahren ferner das Berechnen eines dritten Zustandsparameters ($S3_p$), der auf Basis des berechneten dritten mechanischen Eigenschaftswerts anzeigt, ob der Wert der dritten mechanischen Eigenschaft ($MP3$) normal oder nicht normal ist, und das Überwachen des Zustandes des Roboters auf Basis des ersten ($S1_p$), des zweiten ($S2_p$) und des dritten Zustandsparameters ($S3_p$) umfasst.

8. Verfahren nach Anspruch 6 oder 7, wobei die zweite mechanische Eigenschaft Geräusche sind und die dritte mechanische Eigenschaft Spiel ist.

9. Verfahren nach einem der Ansprüche 2, 4 oder 7, **wobei** das Verfahren ferner das Entscheiden auf Basis des Zustandsparameters (der Zustandsparameter) ($SP$, $S1_p$,$S2_p$,$S3_p$), ob eine Fehlfunktion vorliegt, umfasst.

10. Verfahren nach einem der Ansprüche 4 oder 7, **wobei** das Verfahren ferner das Erzeugen eines Alarms ($A$) umfasst, wenn einer der Zustandsparameter ($SP$, $S1_p$,$S2_p$,$S3_p$) anzeigt, dass die mechanische Eigenschaft nicht normal ist.

11. Verfahren nach einem der Ansprüche 2, 4 oder 7, **wobei** das Verfahren ferner Folgendes umfasst:

- Berechnen einer Abweichung ($D$) zwischen dem berechneten mechanischen Eigenschaftswert ($MP$, $MP1$, $MP2$, $MP3$) und einem erwarteten mechanischen Eigenschaftswert ($MP_{exp}$, $MP1_{exp}$, $MP2_{exp}$, $MP3_{exp}$, $MP_{expi}$) und
- Berechnen des Zustandsparameters ($SP$, $S1_p$,$S2_p$,$S3_p$) auf Basis der Abweichung.

12. Verfahren nach einem der vorhergehenden Ansprüche, **wobei** die Messdaten ($MD$) Informationen zum Motordrehmoment ($T_m$) oder zur Winkelposition ($q_m$) von mindestens einem Motor, der mindestens ein Glied antreibt, beinhalten.

13. Verfahren nach Anspruch 1, **wobei** der berechnete Reibungswert eine Summe von mindestens zwei der folgenden Reibungswerte ist: der viskosen Reibung ($F_v$), der Coulombschen Reibung ($F_C$), der statischen Reibung, der Stribeck-Reibung.

14. Verfahren nach Anspruch 1, wobei der berechnete Reibungswert eine Summe mindestens der folgenden Reibungswerte ist: der viskosen Reibung ($F_v$) und der Coulombschen Reibung ($F_C$).

15. Verfahren nach Anspruch 1, **wobei** der mindestens eine Reibungswert die viskose Reibung ($F_v$) ist.

16. Verfahren nach Anspruch 1, **wobei** der berechnete Reibungswert das Motordrehmoment infolge von Reibung ($T_{fric}$) ist.

17. Steuersystem zum Überwachen des Zustandes eines Industrieroboters (1) mit einer Vielzahl von Gliedern (4, 6, 7, 8, 10, 36, 62), die um eine Vielzahl von Gelenken (3A, 3B, 3C, 3D, 34, 64) relativ zueinander bewegbar sind, wobei das Steuersystem Folgendes umfasst:

   - eine Steuereinheit (20) zum Steuern der Bewegungen der Glieder,
   - eine Berechnungseinheit (39), die angepasst ist, einen Reibungswert (MP, MP1) für mindestens eines der Gelenke auf Basis von Messdaten (MD) von dem Gelenk zu berechnen und auf Basis des berechneten Reibungswerts zu bestimmen, ob die Reibung normal oder nicht normal ist, und
   - eine Überwachungseinheit (40) zum Überwachen des Zustandes des Roboters auf Basis der Bestimmung, ob der Reibungswert normal oder nicht normal ist, **dadurch gekennzeichnet, dass** die Steuereinheit angepasst ist, eines der Glieder (4,6,7,8,10, 36, 62) in die Richtung der Schwerkraft zu bewegen, ein Glied in eine Richtung, die der Schwerkraftrichtung entgegengesetzt ist, zu bewegen, während der Bewegungen des Glieds Messdaten zu sammeln und die Geschwindigkeit im Wesentlichen konstant zu halten, während die Messdaten gesammelt werden, und die Berechnungseinheit (39) angepasst ist, den Reibungswert (MP2) auf Basis der gesammelten Messdaten zu berechnen.

18. Steuersystem nach Anspruch 17, **wobei** die Berechnungseinheit angepasst ist, einen ersten Zustandsparameter (SP, $S1_p$) zu berechnen, der auf Basis des berechneten Reibungswerts anzeigt, ob die Reibung normal oder nicht normal ist, und die Überwachungseinheit (40) angepasst ist, den Zustand des Roboters auf Basis des ersten Zustandsparameters zu überwachen.

19. Steuersystem nach Anspruch 17 oder 18, **wobei** die Berechnungseinheit (39) ferner angepasst ist, einen zweiten Wert für eine zweite mechanische Eigenschaft (MP2) zu berechnen, und die Überwachungseinheit (40) angepasst ist, auf Basis der Bestimmung, ob die zweite mechanische Eigenschaft normal oder nicht normal ist, den Zustand des Roboters zu überwachen.

20. Steuersystem nach Anspruch 19, wobei die zweite mechanische Eigenschaft Geräusche sind.

21. Steuersystem nach Anspruch 19, **wobei** die Berechnungseinheit (39) angepasst ist, einen zweiten Zustandsparameter ($S2_p$) zu berechnen, der auf Basis der berechneten zweiten mechanischen Eigenschaft anzeigt, ob die zweite mechanische Eigenschaft (MP2) normal oder nicht normal ist, und die Überwachungseinheit (40) angepasst ist, den Zustand des Roboters auf Basis des ersten ($S1_p$) und des zweiten Zustandsparameters ($S2_p$) zu überwachen.

22. Steuersystem nach Anspruch 19, **wobei** die Berechnungseinheit (39) ferner angepasst ist, einen dritten Wert für eine dritte mechanische Eigenschaft (MP3) zu berechnen, und die Überwachungseinheit (40) angepasst ist, auf Basis der Bestimmung, ob die dritte mechanische Eigenschaft normal oder nicht normal ist, den Zustand des Roboters zu überwachen.

23. Steuersystem nach Anspruch 22, **wobei** die Berechnungseinheit (39) ferner angepasst ist, einen dritten Zustandsparameter ($S3_p$) zu berechnen, der auf Basis der berechneten dritten mechanischen Eigenschaft anzeigt, ob die dritte mechanische Eigenschaft normal oder nicht normal ist, und die Überwachungseinheit (40) angepasst ist, den Zustand des Roboters auf Basis des ersten, des zweiten und des dritten Zustandsparameters ($S1_p$, $S2_p$, $S3_p$) zu überwachen.

24. Steuersystem nach Anspruch 22 oder 23, wobei die dritte mechanische Eigenschaft Spiel ist.

25. Steuersystem nach einem der Ansprüche 18, 21 oder 23, **wobei** die Überwachungseinheit (40) ferner angepasst ist, einen Alarm (A) zu erzeugen, wenn einer der Zustandsparameter (SP, $S1_p$, $S2_p$, $S3_p$) anzeigt, dass die mechanische Eigenschaft nicht normal ist.

**26.** Steuersystem nach einem der Ansprüche 18, 21 oder 23, **wobei** die Berechnungseinheit ferner angepasst ist, eine Abweichung (D) zwischen mindestens einem berechneten mechanischen Eigenschaftswert (MP, MP1, MP2, MP3) und einem erwarteten mechanischen Eigenschaftswert zu berechnen und den Zustandsparameter (SP, $S1_p$, $S2_p$, $S3_p$) auf Basis der Abweichung (D) zu berechnen.

**Revendications**

**1.** Procédé de surveillance de l'état d'un robot industriel (1) présentant une pluralité de segments (4, 6, 7, 8, 10, 36, 62) déplaçables les uns par rapport aux autres autour d'une pluralité d'articulations (3A, 3B, 3C, 3D, 34, 64), le procédé comprenant de manière répétée

- le déplacement de l'un desdits segments (4, 6, 7, 8, 10, 36, 62) dans le sens de la gravité,
- le déplacement dudit segment dans un sens opposé au sens de la gravité,
- la collecte de données mesurées durant les déplacements du segment,
- le maintien de la vélocité à une valeur essentiellement constante durant la collecte des données mesurées,
- le calcul d'au moins une valeur de frottement pour au moins un desdits segments en fonction des données mesurées collectées relatives audit segment,
- la détermination que le frottement est normal ou anormal en fonction de la valeur de frottement calculée, et la surveillance de l'état du robot en fonction de cette détermination.

**2.** Procédé selon la revendication, le procédé comprenant : le calcul d'un premier paramètre d'état (SP, $S1_p$), lequel indique que le frottement (MP,MP1) est normal ou anormal, en fonction de la valeur de frottement calculée et la surveillance de l'état du robot en fonction dudit premier paramètre d'état.

**3.** Procédé selon la revendication 1 ou 2, le procédé comprenant en outre le calcul d'une deuxième valeur (MP2) d'une deuxième propriété mécanique, la détermination que la deuxième propriété mécanique est normale ou anormale en fonction de la deuxième propriété mécanique calculée, et la surveillance de l'état du robot en fonction de cette détermination.

**4.** Procédé selon la revendication 3, le procédé comprenant en outre le calcul d'un deuxième paramètre d'état ($S2_p$), lequel indique que la deuxième propriété mécanique (MP2) est normale ou anormale en fonction de la deuxième propriété mécanique calculée, et la surveillance de l'état du robot en fonction desdits premier et deuxième paramètres d'état.

**5.** Procédé selon la revendication 3 ou 4, dans lequel ladite deuxième valeur de propriété mécanique (MP2) est une valeur de jeu ou une valeur de bruit.

**6.** Procédé selon l'une quelconque des revendications 3 à 5, le procédé comprenant en outre le calcul d'une troisième valeur (MP3) d'une troisième propriété mécanique, la détermination que la troisième propriété mécanique est normale ou anormale en fonction de la troisième propriété mécanique calculée, et la surveillance de l'état du robot en fonction de cette détermination.

**7.** Procédé selon la revendication 6, le procédé comprenant en outre le calcul d'un troisième paramètre d'état ($S3_p$), lequel indique que la troisième valeur de propriété mécanique (MP3) est normale ou anormale en fonction de la troisième valeur de propriété mécanique calculée, et la surveillance de l'état du robot en fonction desdits premier ($S1_p$), deuxième ($S2_p$), et troisième ($S3_p$) paramètres d'état.

**8.** Procédé selon la revendication 6 ou 7, dans lequel ladite deuxième propriété mécanique est le bruit, et ladite troisième propriété mécanique est le jeu.

**9.** Procédé selon l'une quelconque des revendications 2,4 ou 7, le procédé comprenant en outre la décision qu'il existe ou non une anomalie de fonctionnement en fonction dudit ou desdits paramètres d'état (SP, $S1_p$, $S2_p$, $S3_p$).

**10.** Procédé selon l'une quelconque des revendications 4 ou 7, le procédé comprenant en outre la génération d'une alarme (A) si l'un quelconque desdits paramètres d'état (SP, S1$_p$, S2$_p$, S3$_p$) indique que la propriété mécanique est anormale.

11. Procédé selon l'une quelconque des revendications 2, 4 ou 7, le procédé comprenant en outre :

- le calcul d'un écart (D) entre la valeur de propriété mécanique calculée (MP, MP1, MP2, MP3) et une valeur de propriété mécanique prévue (MP$_{exp}$, MP1$_{exp}$, MP2$_{exp}$, MP3$_{exp}$, MP$_{expi}$), et
- le calcul dudit paramètre d'état (SP, S1$_p$, S2$_p$, S3$_p$) en fonction dudit écart.

12. Procédé selon l'une quelconque des revendications précédentes, dans lequel lesdites données mesurées (MD) comportent des informations sur le couple moteur (T$_m$) ou la position angulaire (q$_m$) d'au moins un moteur entraînant au moins un segment.

13. Procédé selon la revendication 1, dans lequel la valeur de frottement calculée est une somme d'au moins deux des valeurs de frottement suivantes : le frottement visqueux (F$_v$), le frottement de Coulomb (F$_e$), le frottement statique, le frottement de Stribeck.

14. Procédé selon la revendication 1, dans lequel la valeur de frottement calculée est une somme d'au moins les valeurs de frottement suivantes : le frottement visqueux (F$_v$) et le frottement de Coulomb (F$_e$).

15. Procédé selon la revendication 1, dans lequel ladite au moins une valeur de frottement est le frottement visqueux (F$_v$).

16. Procédé selon la revendication 1, dans lequel la valeur de frottement calculée est le couple moteur dû au frottement (T$_{fric}$).

17. Système de commande pour surveiller l'état d'un robot industriel (1) présentant une pluralité de segments (4, 6, 7, 8, 10, 36, 62) déplaçables les uns par rapport aux autres autour d'une pluralité d'articulations (3A, 3B, 3C, 3D, 34, 64), le système de commande comprenant :

- une unité de commande (20) qui commande les déplacements des segments,
- une unité de calcul (39) adaptée pour calculer une valeur de frottement (MP, MP1) d'au moins une desdites articulations en fonction de données mesurées (MD) relatives à ladite articulation, et déterminer que le frottement est normal ou anormal en fonction de la valeur de frottement calculée, et
- une unité de surveillance (40) pour surveiller l'état du robot en fonction de ladite détermination que la valeur de frottement est normale ou anormale,

**caractérisé en ce que** l'unité de commande est adaptée pour déplacer un desdits segments (4, 6, 7, 8, 10, 36, 62) dans le sens de la gravité, déplacer ledit segment dans un sens opposé au sens de la gravité, collecter des données mesurées durant les déplacements du segment, et maintenir la vélocité essentiellement constante durant la collecte des données mesurées, et ladite unité de calcul (39) est adaptée pour calculer la valeur de frottement (MP2) en fonction des données mesurées collectées.

18. Système de commande selon la revendication 17, dans lequel ladite unité de calcul est adaptée pour calculer un premier paramètre d'état (SP, S1$_p$), lequel indique que le frottement est normal ou anormal en fonction de la valeur de frottement calculée, et ladite unité de surveillance (40) est adaptée pour surveiller l'état du robot en fonction dudit premier paramètre d'état.

19. Système de commande selon la revendication 17 ou 18, dans lequel ladite unité de calcul (39) est adaptée en outre pour calculer une deuxième valeur d'une deuxième propriété mécanique (MP2) et ladite unité de surveillance (40) est adaptée pour surveiller l'état du robot en fonction de ladite détermination que la deuxième propriété mécanique est normale ou anormale.

20. Système de commande selon la revendication 19, dans lequel ladite deuxième propriété mécanique est le bruit.

21. Système de commande selon la revendication 19, dans lequel ladite unité de calcul (39) est adaptée pour calculer un deuxième paramètre d'état (S2p), lequel indique que la deuxième propriété mécanique (MP$_2$) est normale ou anormale, en fonction de la deuxième propriété mécanique calculée, et ladite unité de surveillance (40) est adaptée pour surveiller l'état du robot en fonction desdits premier (S1p) et deuxième paramètres d'état (S2$_p$).

**22.** Système de commande selon la revendication 19, dans lequel ladite unité de calcul (39) est adaptée en outre pour calculer une troisième valeur d'une troisième propriété mécanique (MP3) et ladite unité de surveillance (40) est adaptée pour surveiller l'état du robot en fonction de ladite détermination que la troisième propriété mécanique est normale ou anormale.

**23.** Système de commande selon la revendication 22, dans lequel ladite unité de calcul (39) est adaptée en outre pour calculer un troisième paramètre d'état ($S3_p$), lequel indique que la troisième propriété mécanique est normale ou anormale en fonction de la troisième propriété mécanique calculée, et ladite unité de surveillance (40) est adaptée pour surveiller l'état du robot en fonction des premier, deuxième et troisième paramètres d'état ($S1_p$, $S2_p$, $S3_p$).

**24.** Système de commande selon la revendication 22 ou 23, dans lequel ladite troisième propriété mécanique est le jeu.

**25.** Système de commande selon l'une quelconque des revendications 18, 21 ou 23, dans lequel l'unité de surveillance (40) est adaptée en outre pour générer une alarme (A) si l'un quelconques desdits paramètres d'état (SP, $S1_p$, $S2_p$, $S3_p$) indique que la propriété mécanique est anormale.

**26.** Système de commande selon l'une quelconque des revendications 18, 21 ou 23, dans lequel ladite unité de calcul est adaptée en outre pour calculer un écart (D) entre au moins une valeur de propriété mécanique calculée (MP, MP1, MP2, MP3) et une valeur de propriété mécanique prévue, et calculer ledit paramètre d'état (SP, $S1_p$, $S2_p$, $S3_p$) en fonction dudit écart (D).

Fig. 1A

Fig. 1B

Fig. 2

Fig. 3A

Fig. 3B

Fig. 3C

Fig. 4A

Fig. 4B

Fig. 5

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 08318492 B
- US 2005278067 A
- US 2005278148 A